# FASCICULE DE BREVET EUROPEEN

(11) **EP 0 499 494 B1**
(45) Date de publication et mention de la délivrance du brevet: **03.05.1995**
(21) Numéro de dépôt: 92400046.6
(22) Date de dépôt: 08.01.1992
(51) Int. Cl.: B60T 7/10, G05G 1/04, B60T 7/08

(54) **Frein à main de stationnement pour véhicule automobile**
Handbediente Feststellbremse für Kraftfahrzeuge
Handactuated parking brake for motor vehicle

(30) Priorité: 11.02.1991 FR 9101549
(43) Date de publication de la demande: 19.08.1992
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Noel, Jean-Pierre, F-88100 St. Dié (FR); Clerc, Philippe, La Behouille, F-88100 St.Dié (FR)
(74) Mandataire: Martin, Jean-Paul

(56) Documents cités:
- EP-A- 0 251 149
- EP-A- 0 365 396
- DE-A- 3 537 145

## Description

La présente invention a pour objet un frein à main pour véhicule automobile, adapté pour être relié à un câble de freinage.

On connait des freins à main de stationnement comprenant un secteur denté destiné à être fixé au plancher du véhicule, un cliquet adapté pour coopérer avec le secteur denté, et un levier manuel de préhension équipé d'un poussoir associé au cliquet.

Dans une réalisation particulière, le levier de préhension est en tôle et plié en forme de U, dont les deux flasques résultant de ce pliage sont utilisés comme éléments d'association des autres pièces entre elles. Le cliquet est lié à un bouton poussoir de déclenchement, permettant de maintenir le frein verrouillé dans la position souhaitée et corrélativement de le déverrouiller. Le secteur denté coopérant avec le cliquet est associé à un dispositif de fixation du frein sur le plancher du véhicule, et à une articulation permettant au levier son mouvement de rotation par rapport au secteur denté pour assurer la traction du câble de frein. Les flasques du levier en U s'étendent dans la direction souhaitée, sensiblement perpendiculaires à l'action du ou des câbles.

A ce dispositif mécanique, il faut le plus souvent ajouter pour des raisons d'esthétique, une poignée de préhension fréquemment prolongée par un enjoliveur en matière plastique.

Le coût de fabrication de ces freins connus est relativement élevé. De plus, il est nécessaire de prévoir des chaînes d'assemblage spécifiques à chaque type de frein, ce qui ne permet pas d'automatiser leur assemblage. En effet, les leviers peuvent être de forme différente en fonction des souhaits de la clientèle, cette diversité de forme étant peu compatible avec un assemblage automatique des différentes pièces constitutives du frein. Une telle automatisation n'est pas non plus facilitée par la configuration en U du levier.

Enfin, les leviers de préhension des freins connus contiennent une tige poussoir rigide, et sont donc corrélativement rectilignes ou faiblement coudés, ce qui limite la diversité des formes que peut revêtir la poignée de préhension manuelle du levier.

L'invention a pour but de proposer un frein à main de stationnement dont la structure soit simplifiée par rapport à celle des freins connus, et qui permette une automatisation partielle de son assemblage, laquelle diminue le prix de revient du frein.

Suivant l'invention, le frein à main pour véhicule automobile comporte un boitier cassette mécaniquement solidaire du levier de préhension, contenant le secteur denté et le cliquet, ce boitier cassette est articulé autour d'un axe transversal traversant le secteur denté et est adapté pour recevoir l'extrémité du câble.

Ainsi le boitier cassette (appelé ci-après "cassette") peut être standard en ayant donc toujours la même forme, tandis que le levier de préhension associé peut présenter des formes diverses adaptées aux souhaits esthétiques de la clientèle. Cela permet une automatisation de l'assemblage des pièces du frein, à l'exception du levier de préhension. D'autre part, cette structure rend possible la fabrication de la cassette seule en tôle, le levier de préhension étant en matière plastique moulée, ce qui diminue le prix de revient et le poids de l'ensemble.

La cassette métallique subit tous les efforts appliqués sur le frein en ne laissant au levier en matière plastique que les efforts temporaires de serrage du frein lorsqu'on manoeuvre celui-ci à la main.

Suivant d'autres particularités de l'invention :
- La cassette est formée de deux flasques rigidement reliés entre eux par l'axe transversal précité, entre lesquels sont disposés le secteur denté et le cliquet, et qui sont pourvus de moyens de fixation au levier.
- La cassette est logée dans une partie terminale du levier solidarisée avec la cassette, laquelle est munie de nervures intérieures sur lesquelles viennent s'accrocher des flancs complémentaires de retenue de la cassette, lesdits moyens de fixation de la cassette au levier comprenant également par exemple au moins un rivet ou au moins une vis.
- Le levier de préhension contient une tige poussoir semi-rigide pouvant coulisser à l'intérieur du levier et dont l'extrémité peut pousser le cliquet pour le dégager du secteur denté et permettre le basculement du levier et de la cassette autour de leur axe commun de rotation.

Le fait de réaliser une tige poussor semi-rigide, et non plus rigide comme dans la réalisation antérieure connue, permet de fabriquer des leviers plus fortement coudés que les leviers antérieurs, et qui présentent donc une plus grande diversité en fonction des souhaits de la clientèle.

D'autres particularités et avantages de l'invention apparaîtront au cours de la description qui va suivre, faite en référence aux dessins annexés qui en illustrent deux formes de réalisation à titre d'exemples non limitatifs.

La figure 1 est une vue en coupe longitudinale et élevation partielle d'une première forme de réalisation du frein à main de stationnement pour véhicule automobile selon l'invention, en position de repos desserrée.

La figure 2 est une vue en coupe transversale du frein suivant 2-2 de la figure 1.

La figure 3 est une vue en élévation longitudinale et coupe partielle de la cassette et du secteur denté du frein des figures 1 et 2.

La figure 4 est une vue en coupe transversale suivant 4-4 de la figure 3.

La figure 5 est une vue en coupe longitudinale et élévation partielle d'une seconde forme de réalisation du frein à main selon l'invention, en position de repos desserrée.

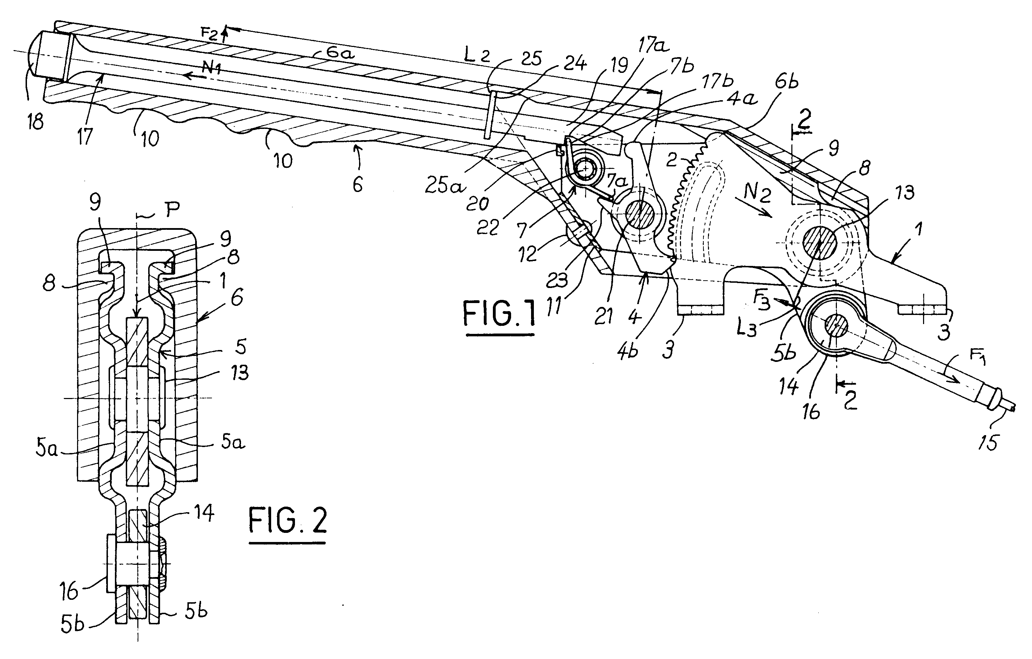

Le frein à main pour véhicule automobile représenté aux figures 1 à 4 comprend un secteur denté 1 pourvu d'une denture 2 et de pattes 3 de fixation au plancher (non représenté) du véhicule, par tous moyens appropriés tels que des vis.

Le frein comprend également une cassette 5 mécaniquement solidaire d'un levier creux 6 comportant une zone de préhension manuelle 6a, et une zone évasée 6b de fixationà la cassette 5. Dans cette zone de fixation 6b sont contenus la cassette 5 ainsi que le secteur denté 1, le cliquet 4 et un ressort de rappel 7 dont l'agencement et le rôle seront explicités ci-après.

Dans le mode de réalisation représenté, la cassette 5 est constituée de deux flasques 5a symétriques par rapport à un plan axial P, entres lesquels sont placés le secteur denté 1, le cliquet 4 et le ressort 7. La cassette 5 logée à l'intérieur de la zone terminale 6b du levier 6, est mécaniquement solidarisée avec celui-ci, au moyen par exemple de nervure 8 saillant intérieurement des parois en vis-à-vis de la zone terminale 6b, en regard l'une de l'autre, et qui sont coiffées par des flancs complémentaires 9 de retenue des flasques 5a. La fixation de la cassette 5 au levier 6 est complétée par exemple au moyen d'une patte intérieure 11 de la cassette 5, appliquée sur une paroi de la zone évasée 6b et d'un élément tel qu'un rivet 12 ou une vis traversant la patte 11 et la paroi de la zone 6b. La cassette 5 est articulée autour d'un axe transveral 13 traversant le secteur denté 1, cet axe 13 pouvant être constitué comme représenté par un rivet. A leur extrémité opposée aux flancs 9, les flasques 5a se terminent par deux bras 5b reliés par un rivet 16 d'assemblage formant un axe d'articulation d'une pièce 14 à laquelle est fixée l'extrémité du câble 15, relié à des éléments de freinage non représentés. Les bras 5b sont sensiblement perpendiculaires à la direction de la traction F1 sur la câble 15.

Le levier 6 peut être avantageusement réalisé en une matière plastique moulée dans ses formes appropriées, avec des cannelures 10 pour à une bonne préhension et correspondant à l'esthétique souhaitée, tandis que la cassette 5 est métallique, par exemple ent tôle.

Les zones creuses 6a, 6b du levier 6 sont obtenues au moyen de deux noyaux mobiles du moule (non représenté), ayant des axes de déplacement N1 et N2 opposés et non parallèles. Du fait de ce non parallèlisme, le levier de préhension 6 est coudé dans sa zone 6b de fixation à la cassette 5, et rectiligne dans sa zone de préhension 6a.

La zone de préhension tubulaire 6a contient une tige poussoir semi-rigide 17, terminée du côté opposé à la cassette 5 par un bouton poussoir 18 saillant partiellement de l'extrémité du levier 6 dans la position normale de repos de la tige poussoir 17. Cette dernière présente, du côté opposé au bouton poussoir 18, une tête 19 dont l'extrémité est placée en vis-à-vis de la partie terminale d'une branche 4a du cliquet 4, lequel est articulé autour d'un tourillon transversal 21 fixé aux flasques 5a. le cliquet 4 comporte une seconde banche 4b, opposée à la branche 4a, et munie d'un bec évidé pouvant engrener avec la denture 2. Celle-ci s'étend sur un secteur angulaire approprié, par exemple de l'ordre de 60° environ et qui correspond à l'angle de débattement du levier 6 et de la cassette 5.

Le ressort 7 est enroulé autour d'un axe transversal 22 reliant les flasques 5a et fixé à ceux-ci. Une première extrémité 7a du ressort 7 coopère avec un doigt 23 du cliquet 6, placé entre les deux branches 4a et 4b, de telle sorte que la force ainsi exercée sur le cliquet 4 tende à le rappeler constamment dans sa position d'engrènement avec la denture 2. La seconde extrémité 7b du ressort 7 est engagée dans une seconde encoche 17a de la tête 19 de la tige poussoir 17 afin de rappeler celle-ci dans sa position initiale, représentée à la figure 1, dans laquelle le bouton poussoir 18 fait partiellement saillie à l'extérieur du levier 6. Du côté du cliquet 4, l'encoche 17a est délimitée par une rampe inclinée 17b sur laquelle peut glisser l'extrémité 7b et qui facilite son insertion dans l'encoche 17a.

La tige poussoir 17 est pourvue d'un élément 24 saillant transversalement et venant s'appliquer sur une butée 25 d'arrêt de la tige 17, poussée par le ressort 7. La butée 25 est, dans la forme d'exécution représentée, constituée par la paroi transversale d'une encoche ménagée dans la paroi intérieure de la zone de préhension 6a du levier 6 et comportant une rampe 25a d'accès de l'élément 24.

Les rivets 13 et 16 assemblent rigidement les flasques 5a, les formes des bras terminaux 5b pouvant être appropriées à tous les types connus de commande de câbles.

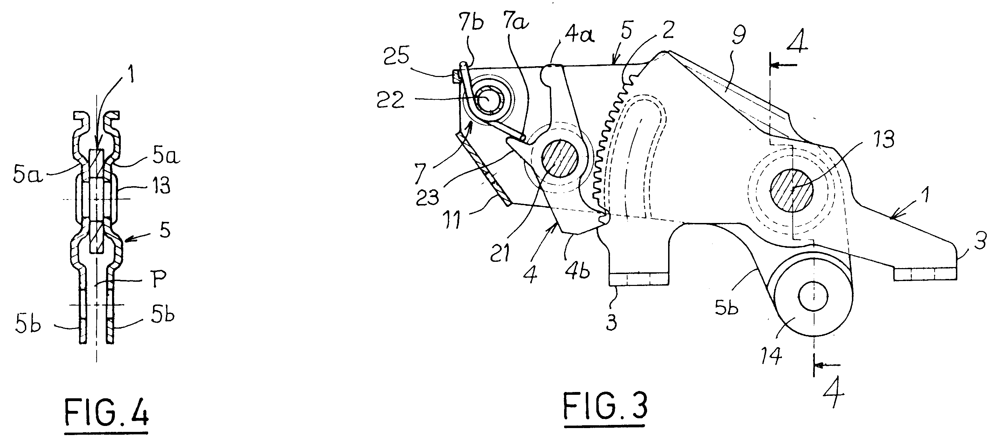

L'un des flasques 5a est muni, à son extrémité voisine de la tête 19 de la tige poussoir 17, d'une patte transversale 20 servant d'appui à l'extrémité 7b du ressort 7, avant assemblage de la cassette 5 et du levier 6 (Fig.3). Lorsque l'ensemble constitué par le secteur 1, la cassette 5, le cliquet 4 et le ressort 7 est introduit dans la zone creuse 6a du levier 6, l'extrémité de la branche 7b vient glisser sur la rampe inclinée 17b de l'encoche 17a, puis vient en butée contre la paroi transvesale de cette encoche 17a, qui écarte ainsi la branche 7b de la patte 20.

Le fonctionnement du frein à main qui vient d'être décrit est le suivant.

En position de repos, (Fig.1) le levier 6 et la cassette 5 sont maintenus en position basse sous l'action de l'effort F1 développé par les ressorts de rappel (non représentés) du câble 15. Dans cette position de repos, le bec de la branche 4b du cliquet 4 n'engrène pas avec la denture 2. Lorsque l'utilisateur veut actionner le frein, il saisit la zone de préhension 6a en placant ses doigts dans les cannelures 10 et soulève le levier 6 dans la direction F2, pour le faire basculer ainsi que la cassette 5, autour de leur axe commun 13. Le basculement du levier 6 est transmis à la cassette 5 par les flancs de retenue 9 et par la patte de fixation 11. Il en résulte sur le câble 15 une traction proportionnelle à l'effort F2 appliqué par l'utilisateur sur le levier 6, et ce dans le rapport des bras de levier respectifs L2 et L3 des efforts F2 et F3.

Durant le soulèvement du levier 6 par l'utilisateur, la rotation du levier 6 et de la cassette 5 autour de leur axe commun 13 déplace le cliquet 4 par rapport au secteur denté 1. De ce fait, le bec 4b du cliquet 4 s'encliquette sur la denture 2 du secteur denté 1 jusqu'à une position où l'utilisateur cesse cette action sur le levier 6, ceci grâce à l'action de la branche 7a du ressort 7 sur le doigt 23 du cliquet 4.

Pour déverrouiller le frein, l'utilisateur soulève légèrement le levier 6 de façon à faciliter le mouvement du cliquet 4, et il s'appuie sur le bouton poussoir 18, à l'encontre des forces de rappel du ressort 7, de façon à dégager le bec 4b de la enture 2. Il peut alors accompagner le levier 6 vers sa position de repos à l'encontre des efforts de traction du câble 15.

Pendant la manoeuvre, le levier 6, avantageusement réalisé en matière plastique moulée, subit les contraintes et efforts dûs à la tension du câble 15. En revanche, dès que le frein a atteint sa position serrée (ou inversement sa position desserrée) les efforts produits par la tension du câble 15 sont encaissés uniquement par la cassette 5, et donc seulement par des éléménts métalliques. Ainsi la séparation du levier de manoeuvre en eux éléments constitutifs mécaniquement solidaires, à savoir le levier 6 et la cassette 5, le premier pouvant être avantageusement en matière plastique et le second étant métallique et de forme standard quelque soit la configuration dulevier de préhension 6, permet de ne faire subir à ce dernier que les efforts temporaires de serrage du frein lorsqu'on manoeuvre celui-ci à la main. Ces efforts peuvent être supportés par un levier réalisé en matière plastique, ce qui réduit sensiblement le poids et le prix de revient de l'ensemble du frein.

En effet, on réalise un gain de poids non négligeable du frein grâce au fait que la cassette 5 présente un dimensionnement juste suffisant pour la reprise des efforts, en ne nécessitant que très peu de tôle.

La cassette 5 peut être assemblée aisément et automatiquement aux autres pièces, à l'exception du levier moulé 6.

Enin, le fait que le ressort de rappel 7 coopère à la fois, mais indépendamment, avec le cliquet 4 pour le rappeler en appui sur le secteur denté 1 et avec la tige poussoir 17, réduit les bruits de fonctionnement lors du serrage du frein.

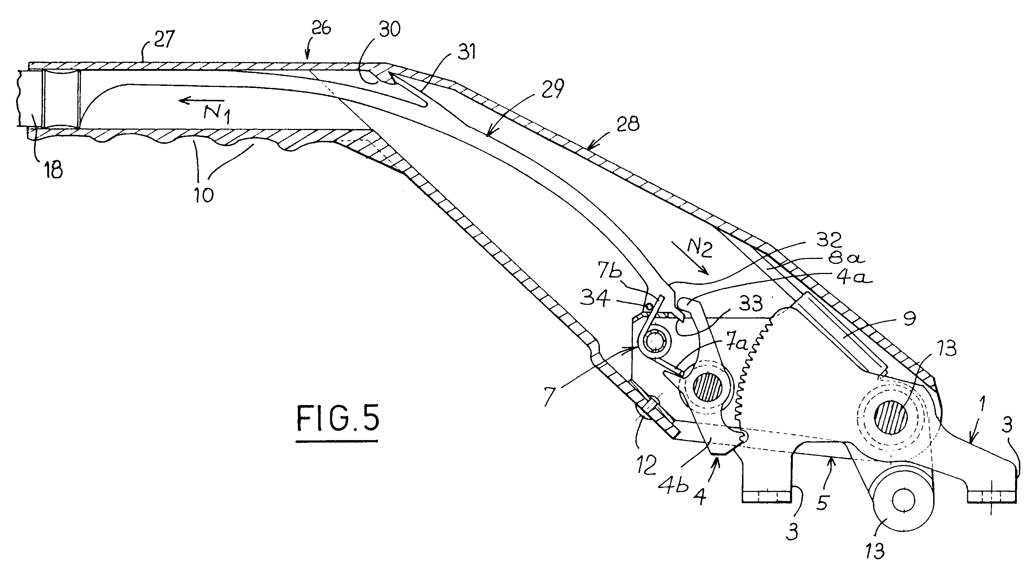

Dans la seconde forme de réalistion illustrée à lma figure 5, le frein à main selon l'invention diffère du précédent par le fait que son levier 26 est fortement coudé. Il est constitué d'une première zone 27 de préhension manuelle, rectiligne, et d'une seconde zone 28 de fixation à la cassette 5, plus longue que la zone de fixation correspondante 6a de la figure 1. La tige poussoir 29 est incurvée pour s'adapter au coude du levier 26. Elle est equipée d'une patte 31 saillant latéralement vers le bouton poussoir 18, et adaptée pour venir en appui contre une butée d'arrêt correspondante 30 formée sur la paroi intérieure de l'extrémité de la zone de préhension 27. La patte 31 est arrêtée par la butée 30 dans la position de repos de la tige poussoir 29. Cette dernière est de plus pourvue à sa tête 32 d'un doigt 33 agencé pour coopérer avec l'extrémité de la branche 4a du cliquet 4, et d'un ergot 34 d'appui de la branche 7b du ressort 7. La zone 28 de fioxation à la cassette 5 est pourvue de nervures intérieures 8a coopérant avec les flancs complémentaires 9 de la cassette 5. Ces flancs 8a sont plusz longs que les flancs 8 du frein de la figure 1, en raison de la longueur de la zone 28 supérieure à celle de la zone 6a.

Lors de l'actionnement du frein et de l'appui del'utilisateur sur le bouton poussoir 18, la tige 29 subit une légère flexion, autorisée par sa semi-rigidité et par la largeur de la zone creuse 28. Néanmoins, elle est capable de transmettre au cliquet 4 un effort suffisant pour déverrouiller le frein et par conséquent, le fonctionnement du frein est sensiblement identique à celui des Figures 1 à 4.

L'invention est susceptible de recevoir de nombreuses variantes d'exécution.

## Revendications

1. Frein à main pour véhicule automobile, adapté pour être relié à un câble(15) de freinage, comprenant un secteur denté(1, 2) destiné à être fixé au plancher du véhicule, un cliquet(4) adapté pour coopérer avecle secteur denté, et un levier manuel (6 ; 26) de préhension équipé d'un poussoir(18) associé au cliquet, caractérisé en ce qu'il comporte un boitier(5) mécaniquement solidaire du levier de préhension, contenant le secteur denté(1, 2) et le cliquet(4), et ce boitier cassette est articulé autour d'un axe transversal(13) traversant le secteur denté et est adapté pour recevoir l'extrémité du câble(15).

2. Frein selon la revendication 1, caractérisé en ce que le boitier cassette(5), est formé de deux flasques(5a) rigidement reliés entre eux par l'axe transversal précité(13), entre lesquels sont disposés le secteur denté(1) et le cliquet(4) et qui sont pourvus de moyens(8, 11, 12) de fixation au levier(6; 26).

3. Frein selon la revendication 2, caractérisé en ce que le boitier cassette(5) est logé dans une partie terminale(6b ; 28) du levir(6 ; 26) solidarisée avec le boitier cassette, lequel est muni de nervures intérieures(8 ; 8a) sur lesquelles viennent s'accrocher des flancs complémentaires(9) de retenue du boitier cassette, lesdits moyens de fixation du boitier cassette ou levier comprenant également par exemple au moins un rivet(12) ou au moins une vis.

4. Frein selon l'une des revendications 1 à 3, caractérisé en ce que le levier de préhension(6 ; 26) contient une tige poussoir semi-rigide(17 ; 29) pouvant coulisser à l'intérieur du levier(6 ; 26) et dont la tête(19 ; 32) peut pousser le cliquet(4) pour le dégager du secteur denté(2) et permettre le basculement du levier et du boitier cassette(5) autour de leur axe commun(13) de rotation.

5. Frein selon la revendication 4, caractérisé en ce que le levier(26) est coudé et la tige poussoir(29) est incurvée pour épouser le coude du levier.

6. Frein selon l'une quelconque des revendications 1 à 5, caractérisé en ce que le levier de préhension(6 ; 26) est réalisé en matière plastique moulée, et présente deux zones creuses(6a, 6b ; 27, 28) respectivement dans la zone de préhension manuelle et dans la zone de fixation au boitier cassette(5), ces zones creuses étant obtenues au moyen de deux noyaux mobiles du moule ayant des axes de déplacement (N1, N2) opposés et non parallèles.

7. Frein selon l'une des revendications 1 à 6, caractérisé en ce qu'il comprend un ressort de rappel(7), logé dans le boitier cassette(5), et dont une première extrémité(7a) coopère avec le cliquet(4) pour le rappeler dans sa position d'appui sur le secteur denté(1, 2) et la seconde extrémité(7b) coopère avec la tige poussoir(17, 29) pour la rappeler dans sa position initiale de repos, qui correspond à la position d'appui du cliquet sur le secteur denté.

8. Frein selon la revendication 7, caractérisé en ce que la tige poussoir(17 ; 29) est pourvue d'un élément saillant(24 ; 31) apte à coopérer avec une butée(25 ; 30) intérieure du levier(6 ; 26) sous la poussée du ressort de rappel(7) pour retenir le levier dans sa position de repos correspondant à l'appui du cliquet(4) sur le secteur denté(1, 2).

## Claims

1. A hand brake for a motor vehicle adapted to be connected to a brake cable (15), comprising a toothed sector (1, 2) intended to be fixed to the floor of the vehicle, a pawl (4) adapted to cooperate with the toothed sector, and a hand gripping lever (6; 26) provided with a push button (18) associated with the pawl; characterized in that it includes a box casing (5) mechanically joined to the gripping lever, containing the toothed sector (1, 2) and the pawl (4), and this box casing is articulated round a transverse pin (13) passing through the toothed sector and is adapted to receive the end of the cable (15).

2. A brake according to claim 1, characterized in that the box casing (5) is formed by two side plates (5a) rigidly interconnected by the above mentioned transverse pin (13), between which the toothed sector (1) and the pawl (4) are disposed, and which are provided with means (8, 11, 12) for fixing to the lever (6; 26).

3. A brake according to claim 2, characterized in that the box casing (5) is accommodated in an end portion (6b; 28) of the lever (6; 26) joined to the box casing, which is provided with internal ribs (8; 8a) to which complementary sides(9) come to be fastened for retaining the box casing, the said means for fixing the box casing or lever also comprising, for example, at least one rivet (12) or at least one screw.

4. A brake according to one of claims 1 to 3, characterized in that the gripping lever (6; 26) contains a semirigid push rod (17; 29) capable of sliding inside the lever (6; 26), and whose head (19; 32) can push the pawl (4) so as to disengage it from the toothed sector (2) and to allow the lever and the box casing (5) to pivot round their common pin (13) of rotation.

5. A brake according to claim 4, characterized in that the lever (26) is bent and the push rod (29) is curved so as to follow the bend of the lever.

6. A brake according to any one of claims 1 to 5, characterized in that the gripping lever (6; 26) is made of a moulded plastic material and has two hollow zones (6a; 6b; 27, 28) respectively in the manual gripping zone and in the zone for fixing to the box casing (5), these hollow zones being obtained by means of two movable cores of the mould having opposed and nonparallel axes of displacement (N1, N2).

7. A brake according to one of claims 1 to 6, characterized in that it comprises a restoring spring (7) accommodated in the box casing (5), and one end (7a) whereof cooperates with the pawl (4) for returning it into its position for bearing on the toothed sector (1, 2), and the second end (7b) cooperates with the push rod (17, 29) so as to return it into its initial rest position which corresponds to the position wherein the pawl bears on the toothed sector.

8. A brake according to claim 7, characterized in that the push rod (17; 29) is provided with a projecting element (24; 31) capable of cooperating with a stop (25; 30) inside the lever (6, 26) under the thrust of the restoring spring (7) so as to retain the lever in its rest position corresponding to the bearing of the pawl (4) on the toothed sector (1, 2).

## Patentansprüche

1. Handbediente Bremse für Kraftfahrzeuge, die dazu eingerichtet ist, mit einem Bremskabel (15) verbunden zu werden, mit einem gezahnten Sektor (1, 2), der dazu bestimmt ist, am Boden des Fahrzeugs befestigt zu werden, einer Klinke (4), die zum Zusammenwirken mit dem gezahnten Sektor ausgebildet ist, und einem Hand-Griffhebel (6; 26), der mit einem mit der Klinke verbundenen Stößel (18) versehen ist, dadurch **gekennzeichnet**, daß sie ein Kassettengehäuse (5) aufweist, das mechanisch mit dem Griffhebel verbunden ist und den gezahnten Sektor (1, 2) und die Klinke (4) enthält, und daß dieses Kassettengehäuse um eine den gezahnten Sektor durchsetzende Querachse (13) schwenkbar ist und dazu eingerichtet ist, das Ende des Kabels (15) aufzunehmen.

2. Bremse nach Anspruch 1, dadurch **gekennzeichnet**, daß das Kassettengehäuse (5) durch zwei durch die vorgenannte Querachse (13) starr miteinander verbundene Flansche (5a) gebildet wird, zwischen denen der gezahnte Sektor (1) und die Klinke (4) angeordnet sind und die mit Mitteln (8, 11, 12) zur Befestigung an dem Hebel (6; 26) versehen sind.

3. Bremse nach Anspruch 2, dadurch **gekennzeichnet**, daß das Kassettengehäuse (5) in einem mit dem Kassettengehäuse verbundenen Endabschnitt (6b; 28) des Hebels (6; 26) untergebracht ist, der mit inneren Rippen (8; 8a) versehen ist, an denen sich komplementäre Halteflanken (9) des Kassettengehäuses einhaken, wobei die genannten Befestigungsmittel des Kassettengehäuses oder des Hebels außerdem beispielsweise wenigstens ein Niet (12) oder wenigstens eine Schraube umfassen.

4. Bremse nach einem der Ansprüche 1 bis 3, dadurch **gekennzeichnet**, daß der Griffhebel (6; 26) eine halbstarre Stößelstange (17; 29) enthält, die im Inneren des Hebels (6; 26) gleiten kann und deren Kopf (19; 32) auf die Klinke (4) drücken kann, um den gezahnten Sektor (2) freizugeben und das Schwenken des Hebels und des Kassettengehäuses (5) um ihre gemeinsame Drehachse (13) zu ermöglichen.

5. Bremse nach Anspruch 4, dadurch **gekennzeichnet**, daß der Hebel (26) abgewinkelt und die Stößelstange (29) gekrümmt ist, um sich der Abwinklung des Hebels anzupassen.

6. Bremse nach einem der Ansprüche 1 bis 5, dadurch **gekennzeichnet**, daß der Griffhebel (6; 26) aus Kunststoff geformt ist und zwei hohle Zonen (6a, 6b; 27, 28) in der Hand-Griffzone bzw. in der Befestigungszone des Kassettengehäuses (5) bildet, wobei diese hohlen Zonen mit Hilfe von wenigstens zwei beweglichen Formkernen erhalten werden, die entgegengesetzte und nicht parallele Bewegungsachsen (N1, N2) haben.

7. Bremse nach einem der Ansprüche 1 bis 6, dadurch **gekennzeichnet**, daß sie eine in dem Kassettengehäuse (5) untergebrachte Rückstellfeder (7) aufweist, deren eines Ende (7a) mit der Klinke (4) zusammenwirkt, um sie in die Anlageposition an dem gezahnten Sektor (1, 2) zurückzustellen, und deren zweites Ende (7b) mit der Stößelstange (17, 29) zusammenwirkt, um sie in ihre anfängliche Ruhestellung zurückzustellen, die der Anlageposition der Klinke an dem gezahnten Sektor entspricht.

8. Bremse nach Anspruch 7, dadurch **gekennzeichnet**, daß die Stößelstange (17; 29) mit einem vorspringenden Element (24;31) versehen ist, das dazu ausgebildet ist, unter der Kraft der Rückstellfeder (7) mit einem inneren Anschlag (25; 30) des Hebels (6; 26) zusammenzuwirken, um den Hebel in seiner der Anlage der Klinke (4) an dem gezahnten Sektor (1, 2) entsprechenden Ruhestellung zu halten.
